# EUROPEAN PATENT SPECIFICATION

(11) **EP 1 840 023 B1**
(45) Date of publication and mention of the grant of the patent: **24.08.2011**
(21) Application number: 06425219.0
(22) Date of filing: 29.03.2006
(51) Int. Cl.: B62M 3/00

(54) **Bicycle pedal crank assembly and related elements**
Fahrrad-Pedaltretkurbelanordnung und verbundene Teile
Assemblage de pédalier de vélo et éléments associés

(43) Date of publication of application: 03.10.2007
(73) Proprietor: Campagnolo S.r.l., 36100 Vicenza (VI) (IT)
(72) Inventor: Valle, Maurizio, 36100 Vicenza (IT)
(74) Representative: Riccardi, Elisa

(56) References cited:
- EP-A- 1 442 974
- EP-A- 1 486 412
- WO-A-99/67125
- FR-A1- 2 791 099
- GB-A- 2 385 837
- US-A1- 2005 178 236

## Description

The present invention refers to a bicycle pedal crank assembly, a pedal crank, and a reinforcing element for a bicycle pedal crank.

EP 1 486 412 Al, WO 99/67125 and EP 1 442 974 A2 each disclose a pedal crank having a hole and an element inserted in the hole and defining a coupling hole for an axle of a pedal or a bottom bracket, as the case may be. The last two documents further show a washer loosely arranged between the pedal crank and the axle.

Bicycle pedal cranks have a weak point in the areas for coupling with the pedal and for coupling with the bottom bracket, where they have a hole for receiving an axle of the pedal or respectively of the bottom bracket. The hole is typically threaded or in any case with a non-smooth wall to prevent the mutual rotation between the pedal crank and the axle, for example it has a polygonal cross-section, in particular square or hexagonal, or else it is a cylindrical or conical hole having grooves or protrusions.

What these types of hole have in common is an inner surface with sharp direction changes, at which the stresses are concentrated and fractures begin. The fractures, when the pedal crank is subject to repeated loads, like during pedalling, expand without the cyclist having the possibility of noticing it. When the resistant cross-section of the pedal crank has been reduced to the point of no longer being sufficient to bear the load of pedalling, it suddenly breaks, with a serious risk to the cyclist's safety. This type of break is known as a fatigue break.

The technical problem at the basis of the present invention is to make bicycle pedal cranks safer, in particular increasing their fatigue lifetime.

The invention concerns, in a first aspect thereof, a bicycle pedal crank assembly comprising a pedal crank having a first end for coupling with a bottom bracket and a second end for coupling with a pedal, at least one of said first end and said second end comprising a hole extending from one side - distal or proximal, respectively - of the pedal crank for coupling with an axle of the pedal or of the bottom bracket, respectively, comprising a reinforcing element or washer extending around the hole at said side of the pedal crank, wherein in the direction of the axis, the reinforcing element has an extent of less than half the extent of the hole and is constrained to the pedal crank.

The Applicant has perceived that the main cause of fatigue breaking of the pedal cranks is tensile stress that occurs in the area around the hole when the cyclist pushes on the pedals.

The Applicant has also noted that the maximum tensile stress occurs in the surface area of the hole, on the side from which the axle of the pedal or of the bottom bracket protrudes.

In the pedal crank assembly according to the invention, thanks to the constraint between the pedal crank and the reinforcing element, the latter is able to absorb a large part of the stresses in said surface area of the hole, straining with the pedal crank and taking the load off the pedal crank. In this way the residual tensile stress in the pedal crank is no longer enough to start and propagate the fractures at the direction changes of the surface of the hole, and the use of the pedal crank is safer.

Typically, the surface of the hole at least in the portion near to the reinforcing element is a surface with a non-smooth wall. The axle is thus effectively held at least in the area of maximum stress.

Preferably, the reinforcing element has a portion configured to receive an abutment portion of said axle resting against it.

In the direction of the axis of the hole, the reinforcing element, preferably, has an extent less than a fifth of the extent of the hole. In this way the overall weight of the pedal crank is reduced.

In a particularly preferred way, in the direction of the axis of the hole the reinforcing element has an extent comprised between one pitch of an inner threading of the hole and twice the pitch.

According to a particularly preferred characteristic of the pedal crank assembly of the present invention, the reinforcing element has a greater modulus of elasticity than that of the pedal crank, so that it is able to absorb a substantial portion of tensile stress of the pedal crank.

Preferably, but not in a limited thereto, the material used to make the reinforcing element with the desired modulus of elasticity is selected among steel, titanium alloy and aluminium alloy.

The constraint can comprise the gluing of the reinforcing element to the pedal crank.

The pedal crank can comprise a protruding seat for housing the reinforcing element.

Preferably, the pedal crank can comprise a recessed seat for housing the reinforcing element.

The constraint can comprise, as an alternative or in addition to gluing, a caulking, in particular a caulking of the pedal crank and/or of the reinforcing element around the recessed or protruding seat for the reinforcing element.

When the pedal crank is made from a composite material, said constraint can, as an alternative or in addition to gluing, be accomplished by co-moulding of the reinforcing element in the pedal crank.

According to an alternative the reinforcing element is not housed in a seat of the pedal crank, rather it is constrained onto the outer surface of the side of the pedal crank.

Preferably, the pedal crank and the reinforcing element are in contact along a respective interface surface not entirely contained in a plane transversal to an axis of the hole.

Preferably, the interface surfaces have an overall sloping progression with respect to said axis, so that the forces exerted by the pedal crank onto the washer due to the constraint are more distributed in the body of the reinforcing element.

In the present description and in the attached claims, by overall sloping progression it is meant to indicate interface surfaces that can locally depart from a conical surface.

In first embodiments, the interface surfaces are conical surfaces.

In this case, the forces transmitted from the pedal crank to the washer act upon many planes perpendicular to said axis and continually arranged one adjacent to the other, substantially for the entire extent of the interface region between the pedal crank and the washer. The constraint is therefore exerted uniformly throughout the body of the reinforcing element.

Preferably, the generating line of the conical surfaces is sloping with respect to a plane perpendicular to the axis by an angle comprised between 5° and 45°, and preferably comprised between 25° and 35°.

In order to increase more the area of the interface surfaces between the pedal crank and the washer and therefore the constraint forces in particular in the case of gluing, the interface surfaces can be rotational surfaces having a curvilinear generating line with two or more inflexion points, rotational surfaces having a curvilinear generating line with one inflexion point, rotational surfaces having an arc of circumference-shaped generating line, rotational surfaces having a stepped generating line or other surfaces, for example deriving from the combination of the above.

The interface surfaces between the pedal crank and the washer can also not be rotational surfaces, for example multi-faceted surfaces and preferably frustum of pyramid-shaped surfaces.

In the above embodiments as well as in others, the interface surface of the reinforcing element can overall converge towards the pedal crank and the interface surface of the pedal crank can overall diverge towards the reinforcing element, or vice-versa the interface surface of the reinforcing element can overall diverge towards the pedal crank and the interface surface of the pedal crank can overall converge towards the reinforcing element.

The interface surfaces between the pedal crank and the reinforcing element can have a different extent at different angular positions about the axis.

Since the force that the cyclist exerts on the pedal changes in strength during the pedalling cycle and thus as a function of the angular position of the pedal crank assembly, with the above provision it is possible to modify the interface surfaces so as to increase the forces transmitted from the pedal crank to the reinforcing element in particular in the case of gluing during the portion of the pedalling cycle when the greatest force is exerted compared to the portion of the pedalling cycle when the smallest force is exerted.

In an embodiment, the interface surfaces between the pedal crank and the reinforcing element are eccentric surfaces with respect to the hole.

Preferably, in this case the axis of the interface surfaces is parallel to the axis of the hole and defines therewith a plane sloping with respect to a longitudinal centre line of the pedal crank by an angle comprised between 30° and 70°.

In another embodiment, the interface surfaces between the pedal crank and the reinforcing element have a different slope at different angular positions about the axis.

Further characteristics and advantages of the present invention shall become clearer from the following detailed description of some preferred embodiments thereof, made with reference to the attached drawings, purely as a nonlimiting example. In the drawings:
- figure 1 is a partially sectional side view of a pedal crank assembly according to the present invention coupled with the axle of a pedal;
- figure 2 is an enlarged cross-section of a part of the coupling area between the pedal crank assembly and the axle of figure 1;
- figure 3 is an enlarged cross-section of a part of the pedal coupling area of the pedal crank assembly of figure 1, wherein the forces acting on a reinforcing element thereof are schematically shown;
- figure 4 is a plan view of the pedal crank of the pedal crank assembly of figure 1, wherein the forces acting on the reinforcing element are schematically shown;
- figure 5 is a cross-section of the pedal coupling area of a pedal crank assembly according to another embodiment of the present invention;
- figure 6 is a cross-section of the pedal coupling area of a pedal crank assembly according to another embodiment of the present invention;
- figure 7 is an enlarged cross-section of the coupling area between the washer and the pedal crank of the pedal crank assembly of figure 6;
- figures 8 to 17 are sections of the pedal coupling area of pedal crank assemblies according to other embodiments of the present invention;
- figure 18 is a cross-section of the pedal coupling area of a pedal crank assembly according to another embodiment of the present invention, wherein the interface surfaces between the pedal crank and the washer have a different extent at different angular positions;
- figure 19 is a plan view of the pedal crank of the pedal crank assembly of figure 18;
- figures 20, 21 and 22 are sections of the pedal coupling area of pedal crank assemblies according to other embodiments of the present invention, wherein the interface surfaces between the pedal crank and the washer have a different extent at different angular positions; and
- figure 23 is a partial perspective view of a pedal crank assembly according to another embodiment of the present invention.

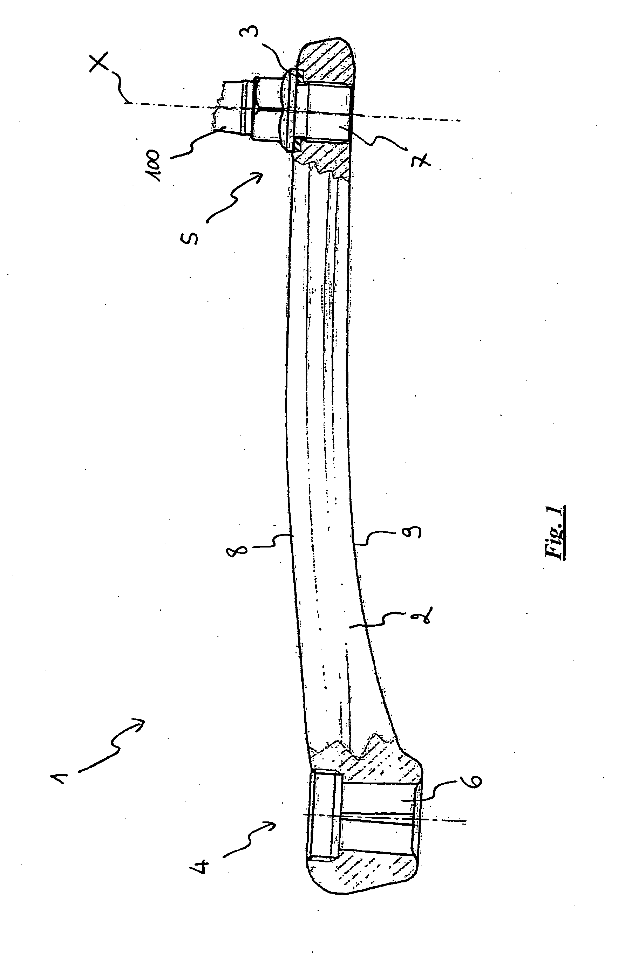

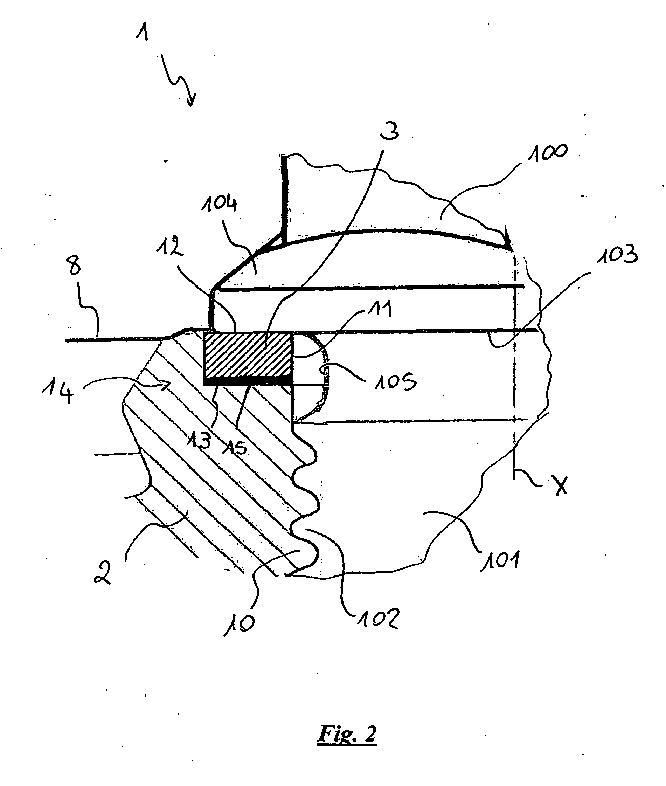

With reference to figures 1 to 4, a pedal crank assembly 1 according to a first embodiment of the invention comprises a pedal crank 2 and at least one reinforcing element or washer 3.

The pedal crank 2 can be made from metallic material, typically light alloys like aluminium alloys, or else from composite material. The composite material used preferably comprises structural fibres embedded in a polymeric material. Typically, the structural fibres are selected from the group consisting of carbon fibres, glass fibres, aramidic fibres, ceramic fibres, boron fibres and combinations thereof, carbon fibres being preferred. Preferably, the polymeric material of the pedal crank is thermosetting, but it could be a thermoplastic material. More preferably, the polymeric material comprises an epoxy resin.

The washer 3 is made from a material with a greater modulus of elasticity than the modulus of elasticity of the material of the pedal crank 2. Preferably, the washer 3 is metallic and even more preferably it is made from a material selected among steel, titanium alloys and aluminium alloys, the same as or different from those of the pedal crank 2.

The pedal crank 2 has a first end 4 for coupling with the axle of a bicycle bottom bracket (not shown) and a second end 5 for coupling with an axle 100 of a pedal (not shown).

The first end 4 of the pedal crank 2 comprises a hole 6 in which, in use of the pedal crank, the axle of the bicycle bottom bracket (not shown) is inserted.

The second end 5 of the pedal crank 2 comprises a hole 7, having an axis X, in which, in use of the pedal crank, the axle 100 is inserted. The hole 7 extends in the body of the pedal crank 2 from the distal side 8 of the pedal crank 2, with reference to the centre of the bicycle. In the illustrated embodiment, the hole 7 extends up to the proximal side 9 of the body of the pedal crank 2, with reference to the centre of the bicycle. In other words, in the illustrated embodiment the hole 7 is a through hole made in the pedal crank 2, but in alternative embodiments it could be a blind hole.

The hole 7 of the illustrated embodiment is a cylindrical hole having an internal threading 10 having a pitch P, but it could alternatively be a hole with polygonal, in particular square or hexagonal, cross-section a cylindrical or conical hole having grooves or protrusions, or a hole configured in another way to prevent the mutual rotation of the axle 100 and of the pedal crank 2 about axis X, at least in a portion in the proximity of the first side 8 of the pedal crank 2 and therefore in the proximity of the washer 3.

The washer 3 extends around the hole 7 at the distal side 8 of the pedal crank 2.

The washer 3 has a hole 11 of a shape and size matching the cross-section of the hole 7 of the pedal crank 2, or such as to include it, to allow the insertion of the axle 100. The hole 11 has an axis coinciding with axis X.

The washer 3 has a first substantially flat surface 12 and a second substantially flat surface 13 opposite surface 12.

The pedal crank 2 has a recessed seat 14 for receiving the washer 3, of a shape matching the shape of the washer 3.

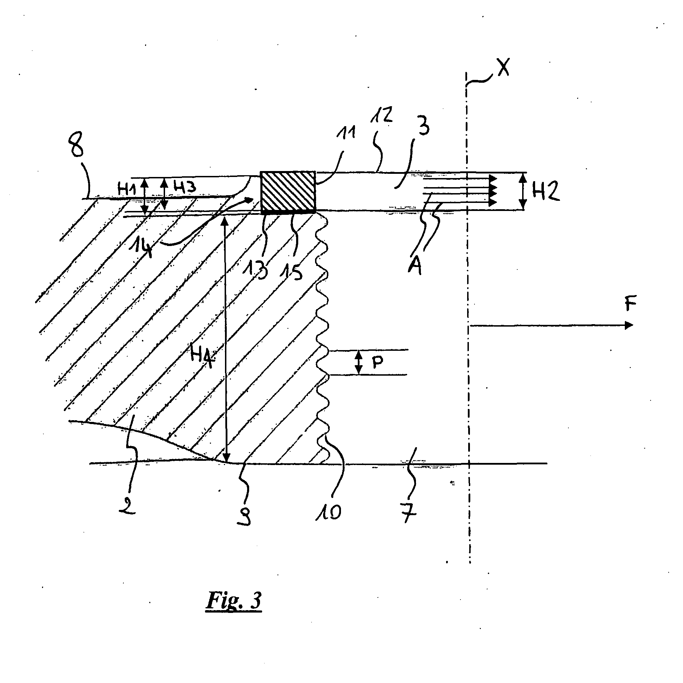

In the direction of axis X, the seat 14 of the pedal crank 2 has an extent H1 and the washer 3 has an extent H2, the contact zone between the pedal crank 2 and the washer 3 has an extent H3 and the hole 7 has an extent H4. It should be noted that, although in figure 3 the washer 3 slightly protrudes outside of the seat 14, it could alternatively be flush with the outer edge of the seat 14, and thus H3 would be substantially equal to H2 apart from the thickness of the layer of glue 15, or else the washer 3 could be housed beneath the outer edge of the seat 14.

The extents H1, H2 and H3 are preferably less than the extent H4 of the hole 7, more preferably less than half the extent H4 of the hole 7, even more preferably less than one fifth of the extent H4.

Moreover, in the most preferred embodiment, said extents H1, H2 and H3 are comprised between one and two pitches P of the threading 10 of the hole 7.

Between the pedal crank 2 and the washer 3, at least at the second surface 13 of the washer 3, a layer of glue 15 is arranged, which constrains the washer 3 to the pedal crank 2.

As stated, in use a pedal is coupled with the pedal crank assembly 1 through the axle 100.

The axle 100 has an end portion 101 configured for passing in the hole 11 of the washer 3 and for coupling in the hole 7 of the pedal crank 2.

In the illustrated embodiment, the end portion 101 of the axle 100 has a threading 102 matching the internal threading 10 of the hole 7 of the pedal crank 2. In other embodiments the end portion 101 of the axle 100 could have a polygonal cross-section or could be equipped with ridges or grooves, matching the cross-section of the hole 7 of the pedal crank 2.

The axle 100 also has an abutment surface 103, typically made in a flange 104 thereof.

It should be noted that in the illustrated embodiment, the axle 100 also has a peripheral throat 105 arranged between the abutment surface 103 and the end portion 101, so that the inner wall of the hole 11 of the washer 3 is not in contact with the axle 100, but in alternative embodiments the throat 105 could be missing, the inner wall of the hole 11 of the washer 3 being in contact with the axle 100.

The Applicant believes that the good performance of the pedal crank assembly 1 according to the invention can be explained as follows.

When the end portion 101 of the axle 100 is screwed into the hole 7 of the pedal crank 2, the abutment surface 103 goes into abutment onto the substantially flat surface 12 of the washer 3.

In use of the bicycle, when the cyclist pushes on the pedals, the axle 100 transmits a tensile force to the pedal crank 2, at the hole 7.

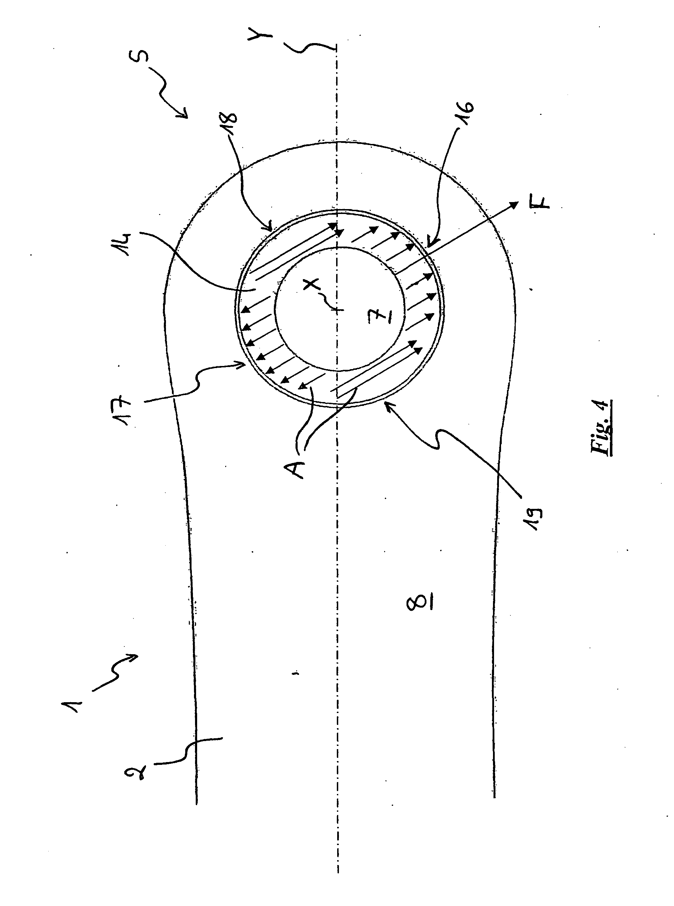

In the most critical condition, wherein the cyclist exerts the maximum thrust on the pedal, the longitudinal axis Y of the pedal crank is sloping by about 45° with respect to the horizontal, with the second end 5 above the horizontal passing through the axle of the bottom bracket, and the force exerted by the cyclist is transferred onto the pedal crank 2 substantially in the direction of the arrow F illustrated in figures 3 and 4, sloping by about 45° with respect to the longitudinal centre line Y of the pedal crank 2. In the present description, for the sake of simplicity, the force component in the plane perpendicular to the middle plane of the pedal crank 2 (plane perpendicular to the plane of figure 4) and the moment of the force F or torque are neglected.

The region 16 of the second end 5 of the pedal crank 2 adjacent to the force F is therefore subject to a tensile force, whereas the opposite region 17 with respect to the axis X of the hole 7 is not subject to any tensile force. The pedal crank 2 is therefore subject to a tensile load, which tends to induce an elastic elongation at the regions 18 and 19 extending between the regions 16 and 17. In other words, the hole 7 of the pedal crank 2 has, in use thereof, the tendency to "become oval".

Due to the repeated load cycles during pedalling, there is the risk of cracks in the throats of the threading 10 of the hole 7 - or of the other sharp direction changes of the wall of the hole 7 -, especially in the proximity of the distal side 8 of the pedal crank 2, and of consequent breaking by fatigue of the pedal crank 2.

The constraint between the pedal crank 2 and the washer 3 obtained through the layer of glue 15 allows the washer 3 to strain or "become oval" together with the pedal crank 2, and to absorb part of such a tensile force, reducing the aforementioned risks. Indeed, such a layer of glue 15 prevents the mutual sliding between the pedal crank 2 and the washer 3. By means of the layer of glue 15, the pedal crank 2 exerts forces on the washer 3 in the direction of the arrows A. More specifically, in the regions 16, 18 and 19 the forces A draw the corresponding region of the washer 3 into elongation as a single piece with the pedal crank 2, whereas in the region 17 the forces A hold the corresponding region of the washer 3, opposing its sliding on the pedal crank 2.

In particular, thanks to the modulus of elasticity of its constituent material that is greater than the modulus of elasticity of the constituent material of the pedal crank 2, the washer 3 absorbs a substantial part of the tensile stress in the surface region of the hole 7.

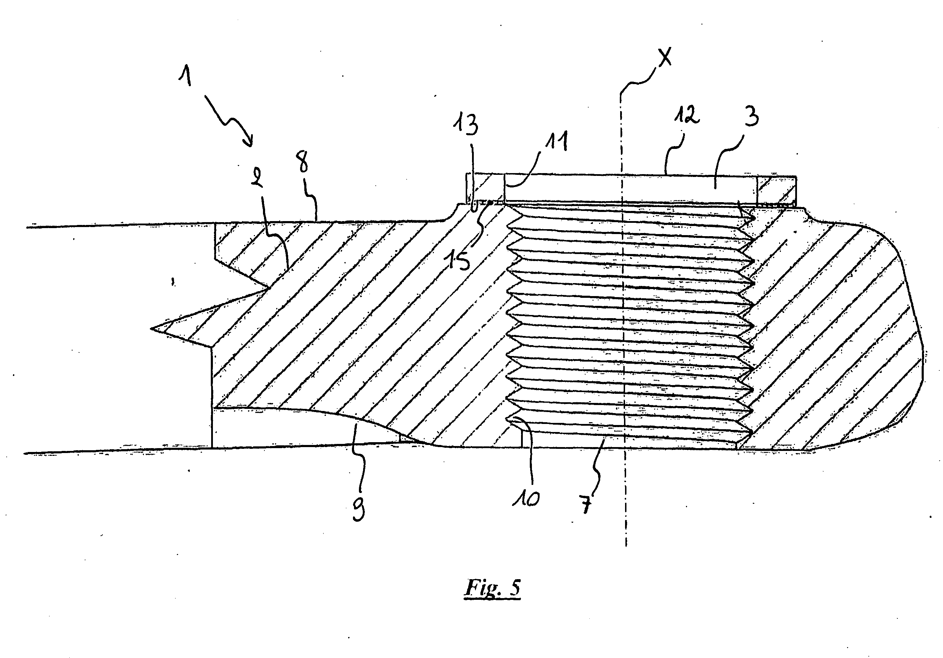

Figure 5 illustrates an alternative according to which the seat 14 for receiving the washer is missing and the washer 3 is glued to the external of the pedal crank 2 at its hole 7.

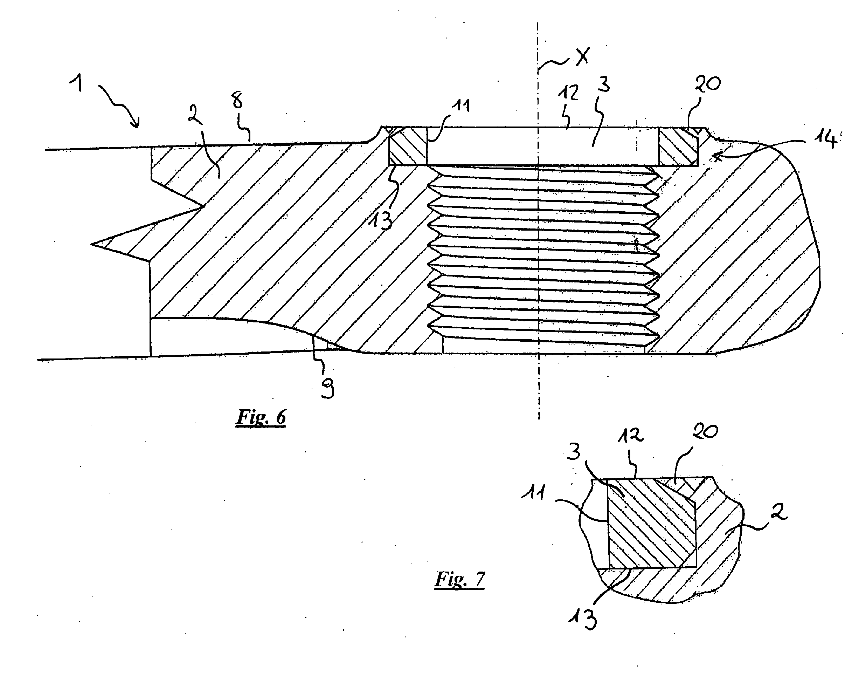

Figures 6 and 7 represent an alternative embodiment of the pedal crank assembly 1, wherein the washer 3 is constrained to the pedal crank 2 by caulking the pedal crank 2 around the seat 14 for the washer 3, so that a part 20 of the material of the pedal crank 2 partially covers the washer 3.

In a further embodiment (not shown), the constraint between the pedal crank 2 and the washer 3 is accomplished both by caulking and by gluing.

In case the pedal crank is made from composite material it is particularly simple to constrain the washer 3 to the pedal crank 2 through co-moulding. When the composite material of the pedal crank 2 is cured it adheres to the washer 3 and prevents any relative mutual movement.

In this case the washer 3 can be held by means of the material of the pedal crank 2 that partially covers the washer 3, similarly to the caulking material 20, or else through other projections or protrusions made in the side wall of the washer 3.

The washer 3 can have alternative shapes to those described up to now.

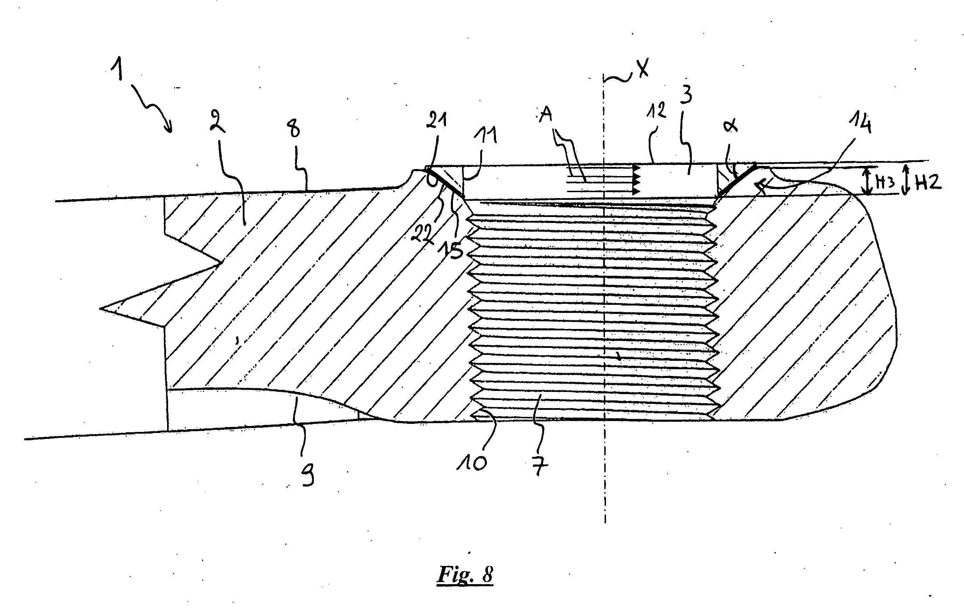

Thus, figure 8 illustrates an embodiment in which the second surface 21 of the washer 3, for interfacing with the pedal crank 2, is a conical surface, having its axis coinciding with the axis X, and the seat 14 for receiving the washer 3 is of a shape matching the shape of the washer 3, in particular having a conical surface 22 for interfacing with the washer 3, with its axis coinciding with the axis X.

Preferably, the conical surface 22 of the seat 14 of the pedal crank 2 and the conical surface 21 of the washer 2, respectively, are sloping with respect to a plane perpendicular to the axis X of the hole 7 of the pedal crank 2 and of the hole 11 of the washer 3, respectively, by an angle α comprised between 5° and 45° and even more preferably comprised between 25° and 35°.

As highlighted in figure 8, the forces A exerted by the pedal crank 2 on the washer 3 through the layer of glue 15 during use of the pedal crank assembly 1 act upon many planes perpendicular to the axis X, substantially for the entire extent H3 of the contact region between the pedal crank 2 and the washer 3. The holding and the drawing into tension actions of the washer 3 are therefore distributed substantially along its entire extent H2 and therefore in its entire body, increasing the portion of tensile stress absorbed by the washer 3 itself.

Similarly, the change in the cross-section of the seat 14 spreads the stresses in the pedal crank 2 over a greater region of material compared with the embodiments described above. The absolute value of the local stresses is therefore low.

Since the maximum values of the local stresses in the pedal crank 2 are smaller, both because of their better distribution and because they are absorbed by the washer 3, the risk of cracks starting on the distal side 8 at the hole 7 is further reduced and therefore the fatigue lifetime of the pedal crank 2 is increased.

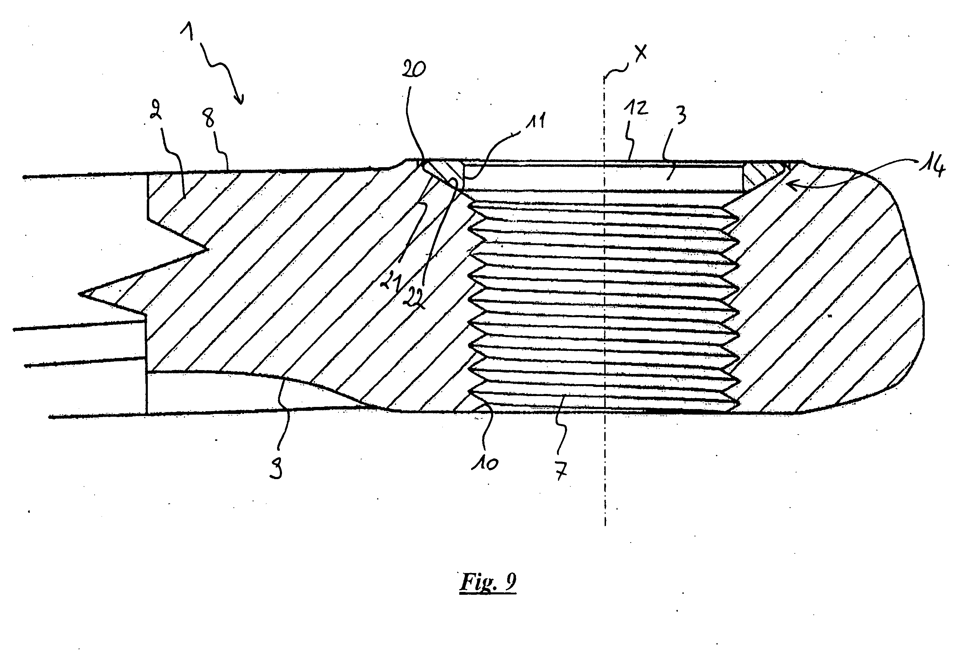

The embodiment of figure 9 differs from the embodiment of figure 8 in that the layer of glue 15 between the interface surfaces 21, 22 between the washer 3 and the pedal crank 2 is replaced by caulking - or by co-moulding - of the pedal crank 2 around the seat 14 for the washer 3, so that a portion 20 of the material of the pedal crank 2 partially covers the washer 3.

Also in the case of conical interface surfaces 21, 22, the constraint between the pedal crank 2 and the washer 3 can be accomplished both by caulking or co-moulding, and by gluing.

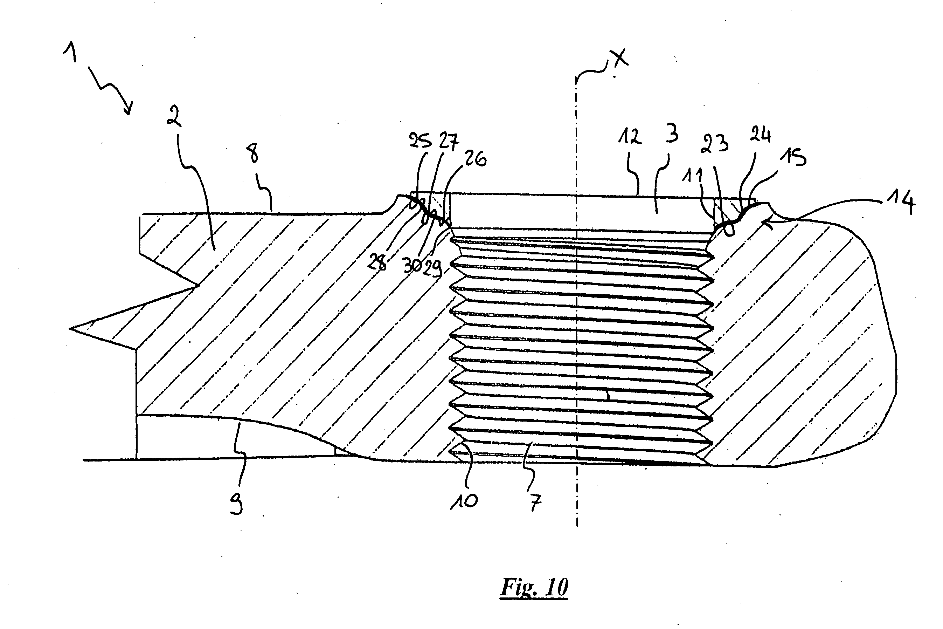

Figures 10 to 14 represent alternative embodiments of the pedal crank assembly 1, wherein the interface surfaces between the pedal crank 2 and the washer 3 are of increased area compared with the case of the embodiments described above, and therefore the forces transmitted from the pedal crank 2 to the washer 3 in particular in the case of gluing are advantageously further increased. In these figures, the constraint is accomplished through gluing, but it could be accomplished, alternatively or in addition thereto, through caulking of the pedal crank 2 or of the washer 3 around the seat 14 for the washer 3, or through co-moulding.

In particular, figure 10 shows a pedal crank assembly 1 wherein the interface surfaces 23, 24 of the washer 3 and of the pedal crank 2, respectively, are rotational surfaces having a curvilinear generating line with two inflexion points. More specifically, the generating line of the interface surface 23 of the washer 3 has two concave portions 25, 26 and a convex portion 27 between them, and the generating line of the interface surface 24 of the pedal crank 2 has two convex portions 28, 29 and a concave portion 30 between them.

Mutual interface surfaces that are rotational surfaces with a generating line having more than two inflexion points can also be used.

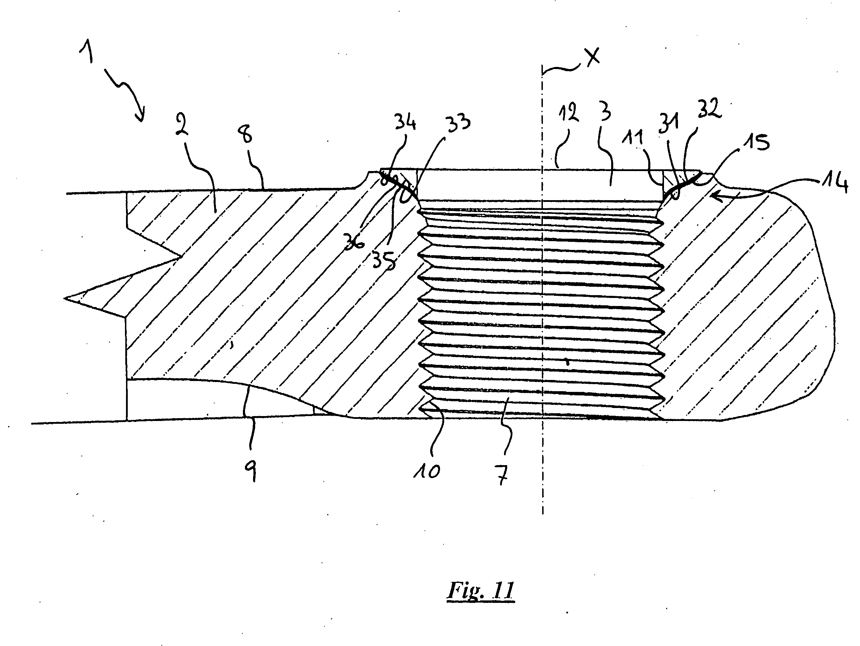

Figure 11 shows a pedal crank assembly 1 wherein the interface surfaces 31, 32 of the washer 3 and of the pedal crank 2, respectively, are rotational surfaces having a curvilinear generating line with one inflexion point. More specifically, the generating line of the interface surface 31 of the washer 3 has a concave portion 33 and a convex portion 34, and the generating line of the interface surface 32 of the pedal crank 2 has a convex portion 35 and a concave portion 36.

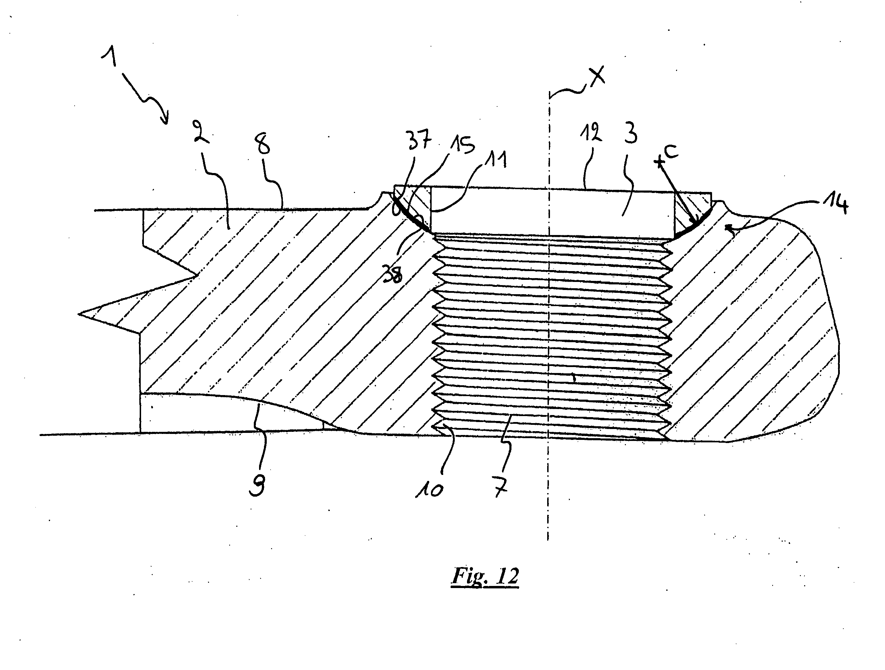

Figure 12 shows a pedal crank assembly 1 wherein the interface surfaces 37, 38 of the washer 3 and of the pedal crank 2, respectively, are rotational surfaces having an arc of circumference-shaped generating line. More specifically, the generating line of the interface surface 37 of the washer 3 is convex, and the generating line of the interface surface 38 of the pedal crank 2 is concave. The centre C of the arc of circumference does not lie on the axis X, but this possibility is also not ruled out, in which case the surfaces 37, 38 would be spherical.

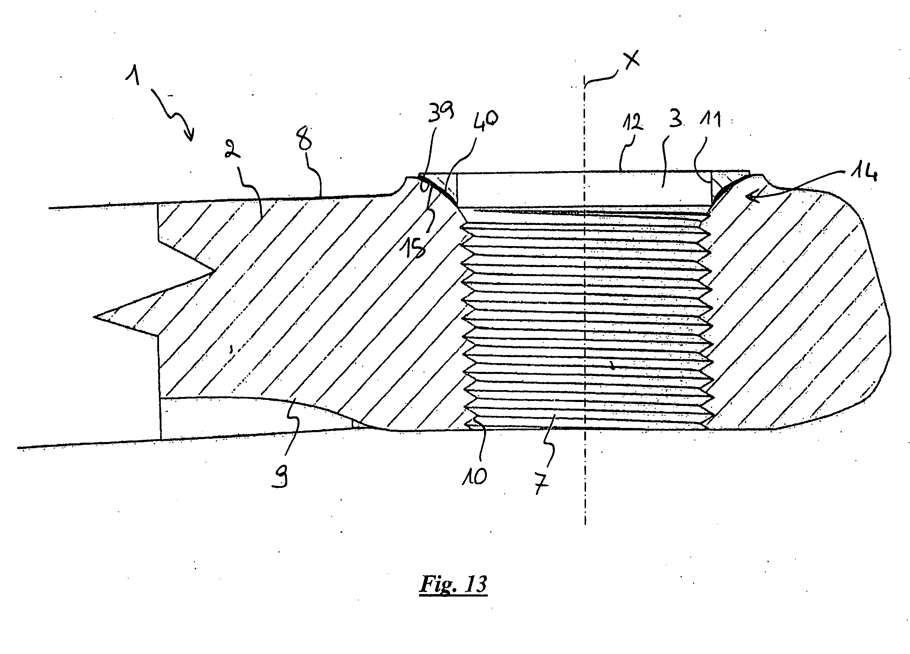

Figure 13 also shows a pedal crank assembly 1 wherein the interface surfaces 39, 40 of the washer 3 and of the pedal crank 2, respectively, are rotational surfaces having an arc of circumference-shaped generating line. In this case, the generating line of the interface surface 39 of the washer 3 is concave and the generating line of the interface surface 40 of the pedal crank 2 is convex.

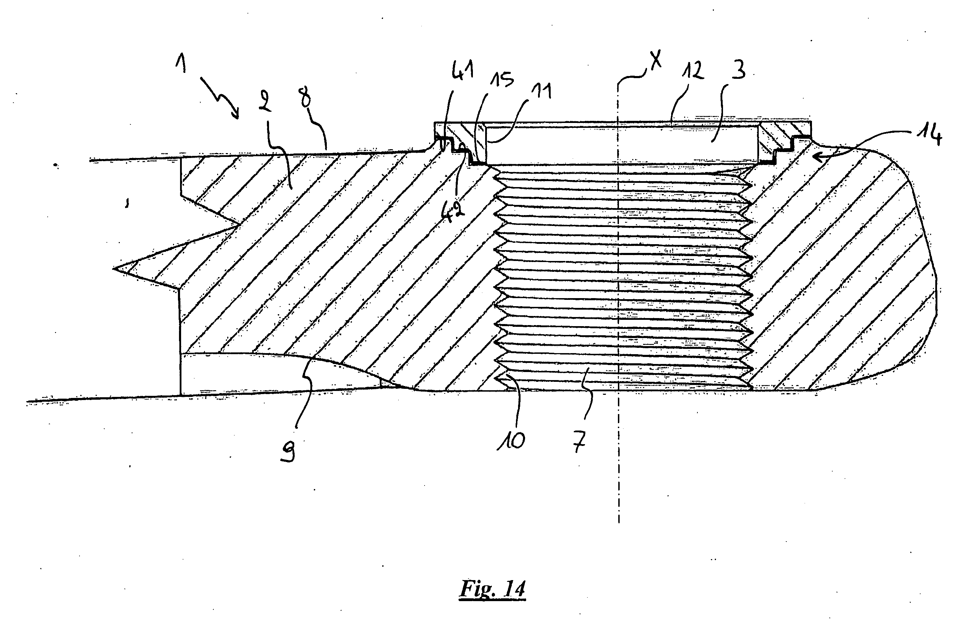

Figure 14 shows a pedal crank assembly 1 wherein the interface surfaces 41, 42 of the pedal crank 2 and of the washer 3, respectively, are rotational surfaces having a stepped generating line. Although three steps are illustrated, rotational surfaces having a generating line with two, four or more steps can be used.

In the embodiments of figures 8 to 14, the interface surfaces between the pedal crank 2 and the washer 3 have an overall sloping progression with respect to the axis X of the hole 7. More specifically, the interface surface of the washer 3 overall converges towards the pedal crank 2 and the interface surface of the pedal crank 2 overall diverges towards the washer 3.

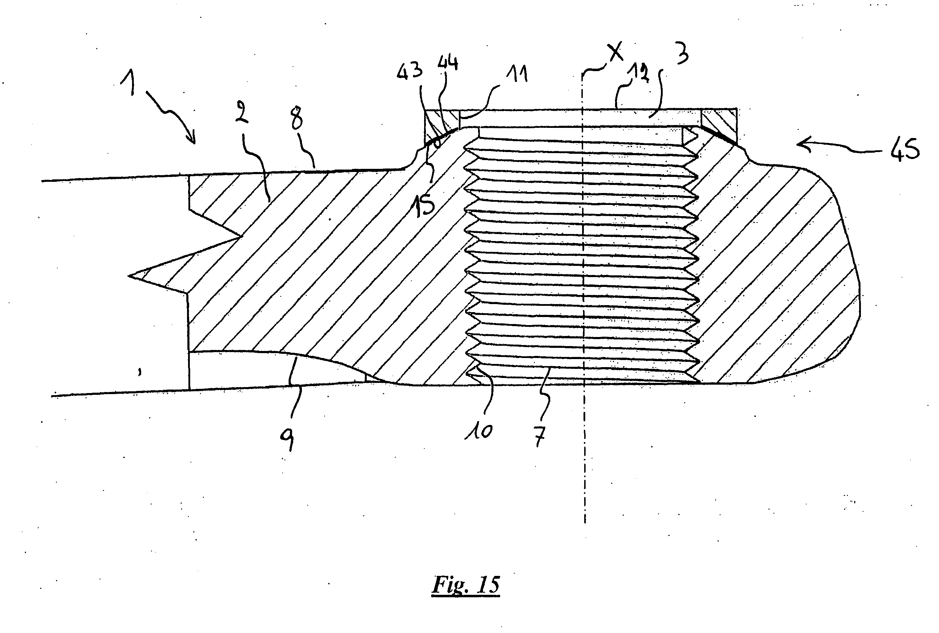

Figure 15 shows a pedal crank assembly 1 wherein the interface surfaces 43, 44 of the washer 3 and of the pedal crank 2, respectively, have an overall sloping progression with respect to the axis X of the hole 7, but with opposite orientation with respect to the embodiments of figures 8 to 14. In particular, the interface surface 43 of the washer 3 overall diverges towards the pedal crank 2, and the interface surface 44 of the pedal crank 2 overall converges towards the washer 3. The interface surfaces 43, 44 are more specifically conical, but they could alternatively be surfaces similar to those described above with reference to figures 8 to 14.

The interface surface 44 of the pedal crank 2 is also made in a seat 45 protruding from the distal side 8 of the pedal crank 2.

It should be understood that also in the other described embodiments, the seat 14 recessed into the pedal crank 2 for receiving the washer 3 can be replaced by a protruding seat 45.

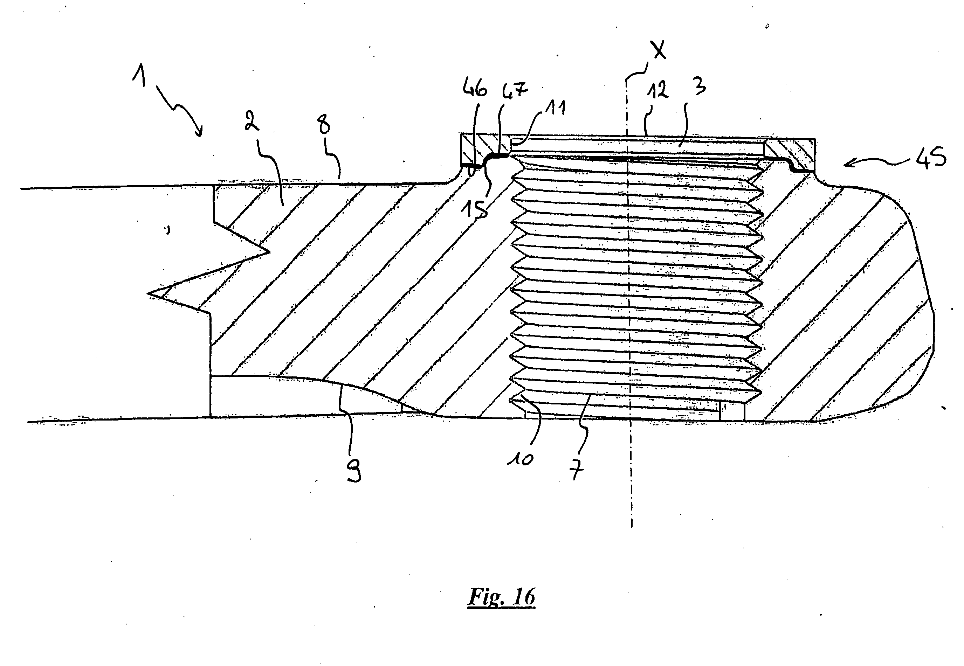

Just as a further example of the above, figure 16 shows a pedal crank assembly 1 wherein the interface surfaces 46, 47 of the washer 3 and of the pedal crank 2, respectively, are stepped, with an overall sloping progression with respect to the axis X of the hole 7, with the interface surface 46 of the washer 3 overall diverging towards the pedal crank 2, and the interface surface 47 of the pedal crank 2 overall converging towards the washer 3.

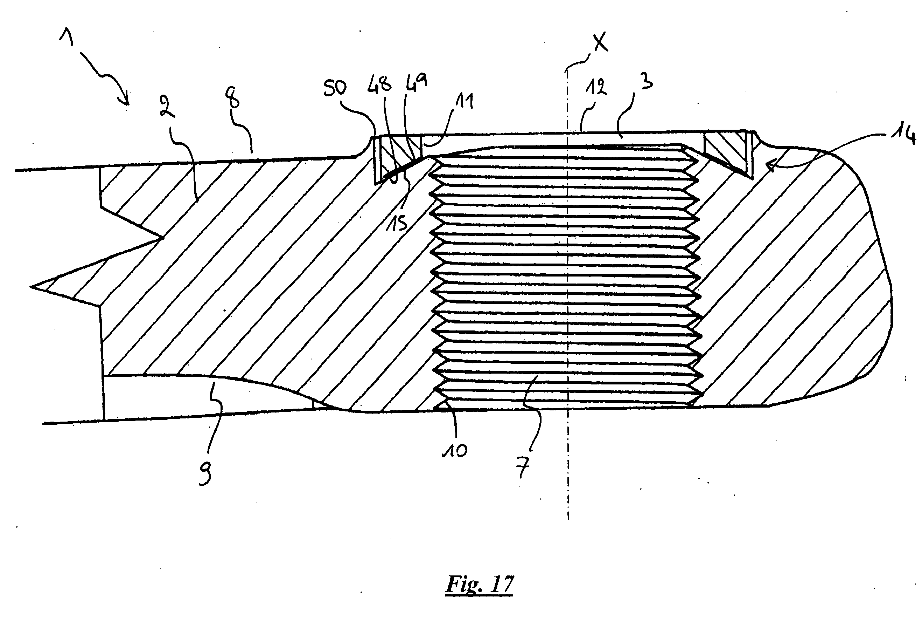

Figure 17 shows a pedal crank assembly 1 similar to the embodiment of figure 15, wherein the interface surface 48 of the washer 3 is conical diverging towards the pedal crank 2, and the interface surface 49 of the pedal crank 2 is conical converging towards the washer 3, but wherein the seat of the pedal crank 2 for receiving the washer 3 is a recessed seat 14. In this case, as in the previous ones, the constraint can be obtained by caulking, gluing, co-moulding or similar systems.

The conical interface surface 49 of the pedal crank 2 protrudes within the seat 14 and wedges into the flaring of the interface surface 48 of the washer 3. When the protrusion of the pedal crank 2 expands because of the tensile stress of the axle 100 inserted in the hole 7, it places the washer 3 under further tensile stress by mechanical effect.

It should be noted that between the seat 14 of the pedal crank 2 and the washer 3 there is an annular clearance 50, which could nevertheless be missing.

In view of the fact that the force that the cyclist exerts on the pedal changes in strength during the pedalling cycle as a function of the angular position of the pedal crank assembly 1, it is possible to modify the interface surfaces between the pedal crank 2 and the washer 3 so as to increase the transmission of the forces A during the portion of the pedalling cycle when the greater force is exerted with respect to the portion of the pedalling cycle when the smallest force is exerted.

This can be obtained by providing for the extent of the interface surfaces between the pedal crank and the washer at different angular positions around the axis X to be different.

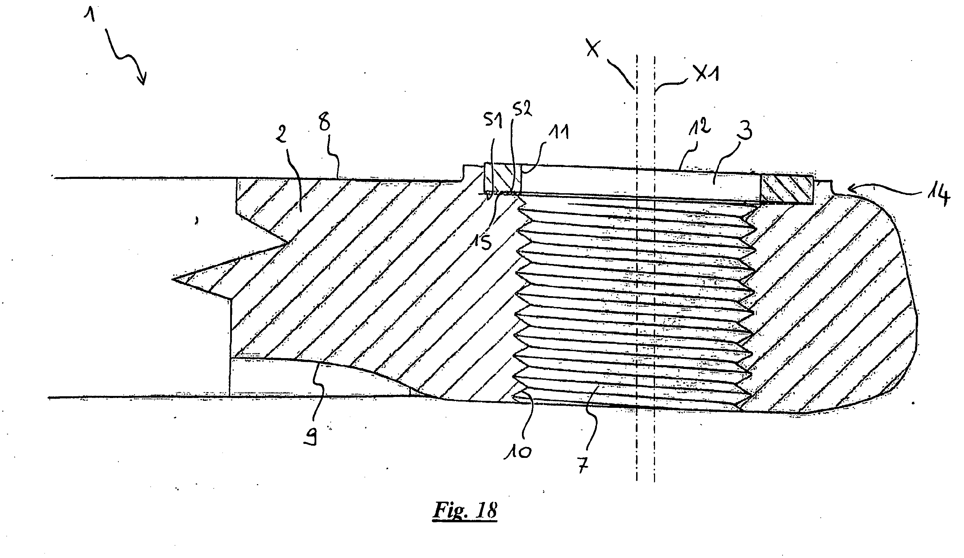

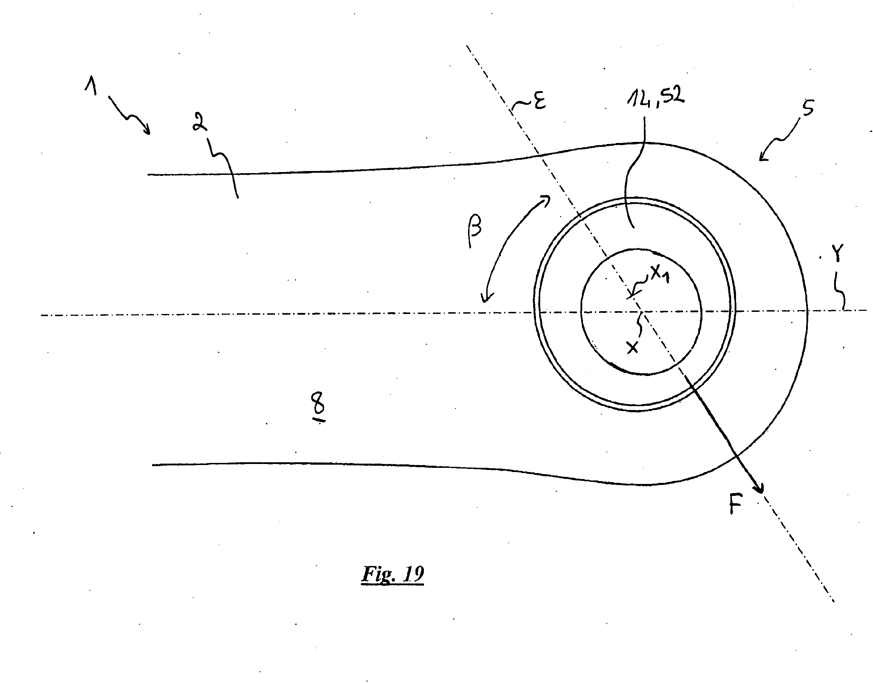

Thus, in the embodiment shown in figures 18 and 19, the pedal crank 2 has a recessed seat 14 for a flat circular washer 3. The washer 3 and the seat 14 are eccentric with respect to the hole 7 of the pedal crank 2 and to the central hole 11 of the washer 2. The interface surface 51 of the washer 3 and the interface surface 52 of the pedal crank 2 therefore have an annulus portion and a cylindrical portion. The axis X1 of the interface surfaces 51, 52 is preferably parallel to the axis X, and preferably defines, with the axis X, a plane ε sloping with respect to the longitudinal centre line Y of the pedal crank 2 by an angle β comprised between 30° and 70°.

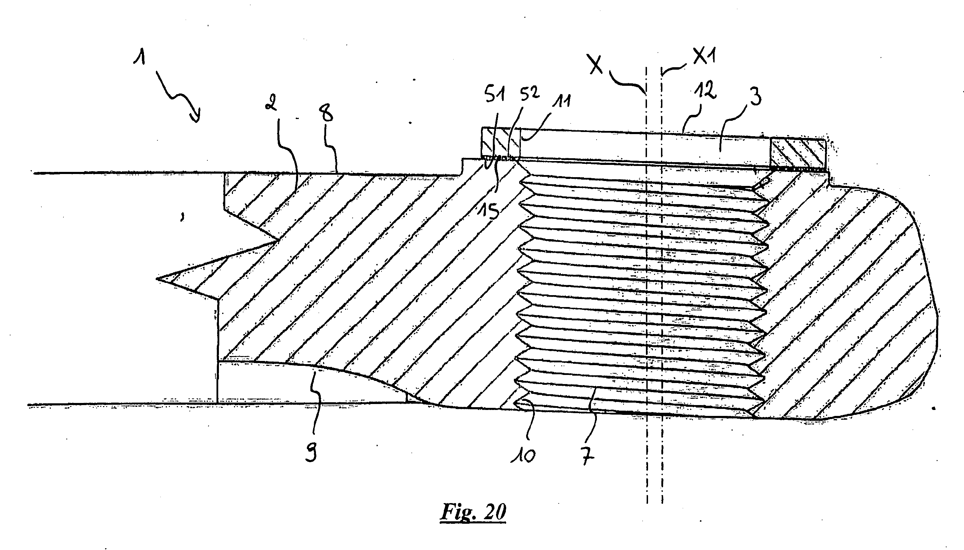

Figure 20 shows a further example of interface surfaces between the pedal crank 2 and the washer 3 with different areas as a function of the angular position. In particular, the pedal crank assembly 1 differs from that of figures 18 and 19 in that the washer 3 is glued to the outside of the pedal crank 2, in other words there is neither a recessed seat 14 nor a protruding seat 45.

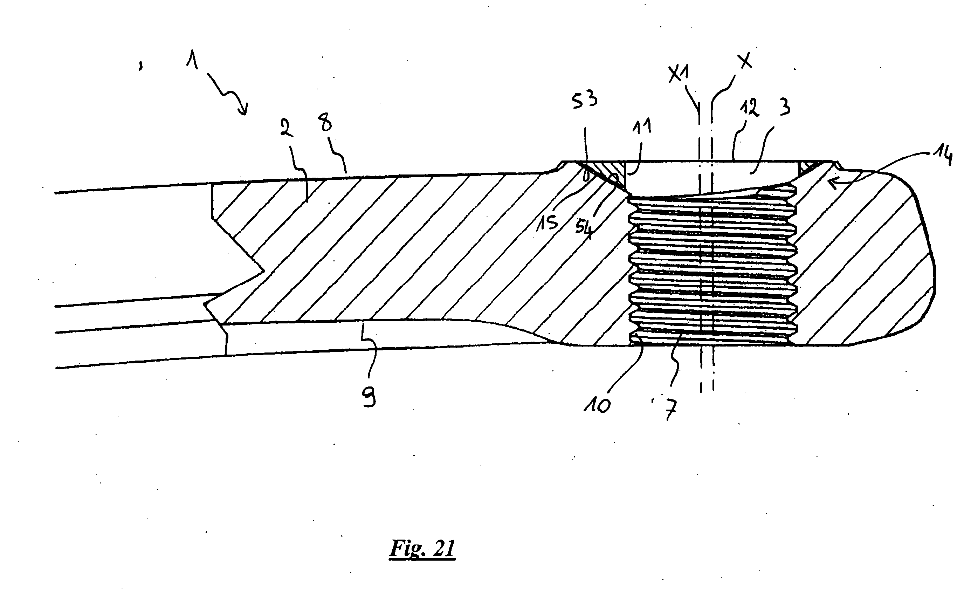

According to an alternative illustrated in figure 21, the interface surfaces 53 and 54 of the washer 3 and of the pedal crank 2, respectively, are conical.

Of course, the other interface surfaces described above could also be made eccentric.

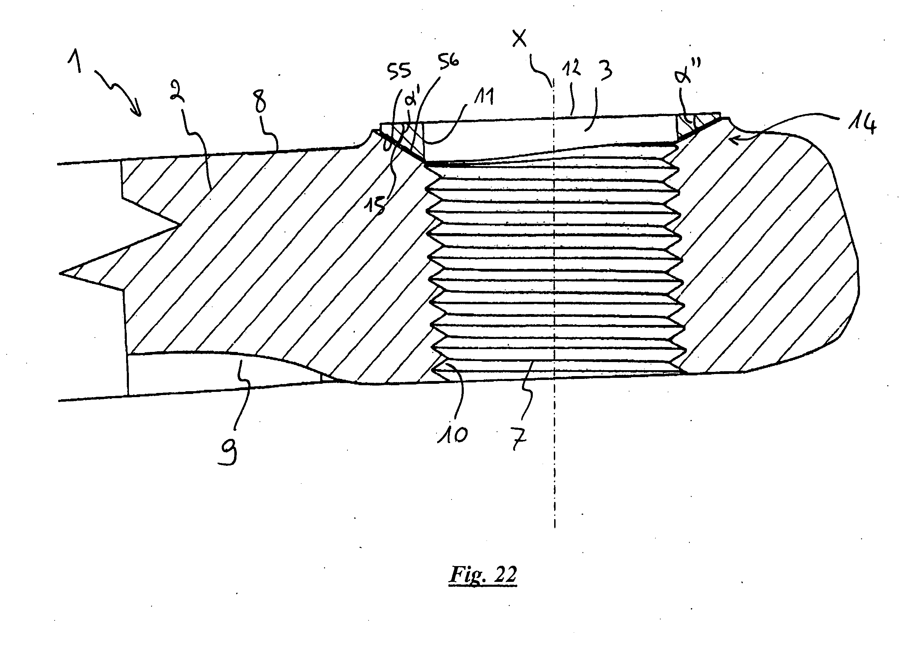

As a further example, in the embodiment shown in figure 22, the interface surface 55 of the washer 3 and the interface surface 56 of the pedal crank 2 have variable slopes as a function of the angular position around the axis X. In figure 22 the two slopes α' and α" are identified at the two angular positions defined by the longitudinal axis Y of the pedal crank 2.

The slope can vary for example between 5° ° and 45°, in a gradual manner all around the axis X. In an embodiment that is particularly simple to carry out, the interface surfaces 55, 56 with gradually variable slope are conical surfaces with sloping axis with respect to the axis X of the hole 7.

The slope of the surfaces 55, 56 can however vary also in sectors, or also there can be a first sector that extends for a first predetermined arc of circumference with a minimum slope, a second sector that extends for a second predetermined arc of circumference with a maximum slope, and two join sectors where the slope varies gradually, preferably linearly, between the minimum slope and the maximum slope.

Interface surfaces between the pedal crank 2 and the washer 3 that are not rotational surfaces, i.e. that do not have circular symmetry, like for example frustum of pyramid-shaped surfaces or more generally faceted surfaces, can be used. In this case, similarly to the case of the embodiments of figures 18 to 22, the mutual rotation between the pedal crank 2 and the washer 3 about the axis X is also prevented.

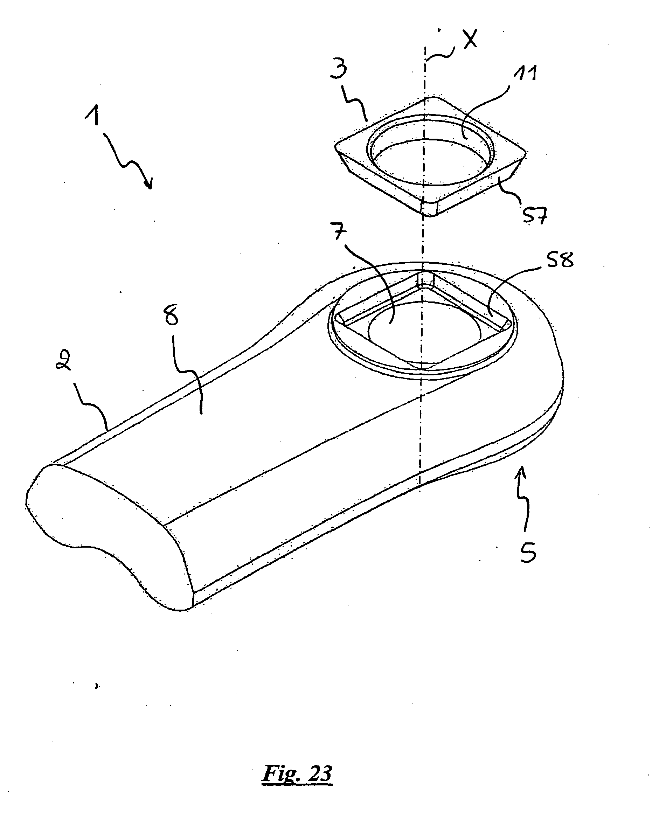

As an example figure 23 shows a pedal crank assembly 1 wherein the interface surfaces 57, 58 of the washer 3 and of the pedal crank 2, respectively, are frustum of square pyramid-shaped surfaces, with smoothed edges.

The base of the pyramid can have any number of sides; moreover, also in the case of multi-facetted or pyramid-shaped interface surfaces, the axis can be sloping and/or eccentric with respect to the axis X.

Moreover, in the various embodiments described above, the substantially flat surface 12 of the washer 3 and/or the abutment surface 103 of the axle 100 could be replaced by a knurled, grooved or otherwise textured surface. Moreover, the hole 11 of the washer 3 could be conical or more generically could have a divergent or convergent progression corresponding to the overall progression of its interface surface with the pedal crank 2, so as to obtain a thinner washer 3, of advantageously less weight.

Those skilled in the art will also understand that what has been described and illustrated applies to the hole 6 for coupling with the axle of the bottom bracket, as an alternative or in addition to the hole 7 for coupling with the pedal.

One or other of the hole 6 for coupling with the bottom bracket axle and the hole 7 for coupling with the pedal can also be replaced by an axle made integrally with the pedal crank, a hole being instead provided in the pedal or in the bottom bracket, respectively.

## Claims

1. Bicycle pedal crank assembly (1) comprising a pedal crank (2) having a first end (4) for coupling with a bottom bracket and a second end (5) for coupling with a pedal, at least one of said first end (4) and said second end (5) comprising a hole (7) extending from a side (8) of the pedal crank (2) for coupling with an axle (100) of the pedal or of the bottom bracket, respectively, comprising a reinforcing element (3) extending around the hole (7) at said side (8) of the pedal crank (2), wherein in the direction of the axis (X), the reinforcing element (3) has an extent (H2) of less than half the extent (H4) of the hole (7) **characterized in that** the reinforcing element (3) is constrained (15, 20) to the pedal crank (2).

2. Pedal crank assembly (1) according to claim 1; **characterised in that** the reinforcing element (3) has a portion (12) configured to receive an abutment portion (103) of said axle (100) resting upon it.

3. Pedal crank assembly (1) according to claim 1 or 2, **characterised in that** in the direction of the axis (X), the reinforcing element (3) has an extent (H2) of less than one fifth of the extent (H4) of the hole (7).

4. Pedal crank assembly (1) according to one of the previous claims, **characterised in that** in the direction of an axis (X) of the hole (7), the reinforcing element (3) has an extent (H2) comprised between one pitch (P) of an internal threading (10) of the hole (7) and twice the pitch (P) .

5. Pedal crank assembly (1) according to any one of the previous claims, **characterised in that** the reinforcing element (3) has a greater modulus of elasticity than that of the pedal crank (2).

6. Pedal crank assembly (1) according to any one of the previous claims, **characterised in that** the reinforcing element (3) is made from a material selected among steel, titanium alloy and aluminium alloy.

7. Pedal crank assembly (1) according to any one of the previous claims, **characterised in that** said constraint comprises gluing (15).

8. Pedal crank assembly (1) according to any one of the previous claims, **characterised in that** the pedal crank (2) comprises a protruding seat (45) for housing the reinforcing element (3).

9. Pedal crank assembly (1) according to any one of claims 1-7, **characterised in that** the pedal crank (2) comprises a recessed seat (14) for housing the reinforcing element (3).

10. Pedal crank assembly (1) according to any one of the previous claims, **characterised in that** said constraint comprises a caulking (20).

11. Pedal crank assembly (1) according to claim 12, **characterised in that** said constraint comprises a caulking (20) of the pedal crank (2) and/or of the reinforcing element (3) around a seat (14, 45) for the reinforcing element (3).

12. Pedal crank assembly (1) according to any one of claims 1 to 9, **characterised in that** the pedal crank (2) is made from a composite material and said constraint is accomplished by co-moulding of the reinforcing element (3) in said pedal crank (2).

13. Pedal crank assembly (1) according to one of claims 1-7 and 10, **characterised in that** the reinforcing element (3) is constrained onto the outer surface of the side of the pedal crank (2).

14. Pedal crank assembly (1) according to any one of claims 1 to 12, **characterised in that** the pedal crank (2) and the reinforcing element (3) are in contact along a respective interface surface (21, 22; 23, 24; 31, 32; 37, 38; 39, 40; 41, 42; 43, 44; 46, 47; 48, 49; 51, 52; 53, 54; 55, 56; 57, 58) not entirely contained in a plane transversal to an axis (X) of the hole (7).

15. Pedal crank assembly (1) according to claim 14, **characterised in that** the interface surfaces (21, 22; 23, 24; 31, 32; 37, 38; 39, 40; 41, 42; 43, 44; 46, 47; 48, 49; 53, 54; 55, 56; 57, 58) have an overall sloping progression with respect to the axis (X).

16. Pedal crank assembly (1) according to claim 15, **characterised in that** the interface surfaces (21, 22; 43, 44; 48, 49; 53, 54) are conical surfaces.

17. Pedal crank assembly (1) according to claim 16, **characterised in that** the generating line of the conical interface surfaces (21, 22; 43, 44; 48, 49; 53, 54) is sloping with respect to a plane perpendicular to the axis (X) by an angle (α) comprised between 5° and 45°.

18. Pedal crank assembly (1) according to claim 15, **characterised in that** the interface surfaces (23, 24) are rotational surfaces having a curvilinear generating line with at least two inflexion points.

19. Pedal crank assembly (1) according to claim 15, **characterised in that** the interface surfaces (31, 32) are rotational surfaces having a curvilinear generating line with one inflexion point.

20. Pedal crank assembly (1) according to claim 15, **characterised in that** the interface surfaces (37, 38; 39, 40) are rotational surfaces having an arc of circumference-shaped generating line.

21. Pedal crank assembly (1) according to claim 15, **characterised in that** the interface surfaces (41, 42; 46, 47) are rotational surfaces having a stepped generating line.

22. Pedal crank assembly (1) according to claim 15, **characterised in that** the interface surfaces (57, 58) are multi-faceted.

23. Pedal crank assembly (1) according to claim 22, **characterised in that** the interface surfaces (57, 58) are frustum of pyramid-shaped surfaces.

24. Pedal crank assembly (1) according to one of claims 15 to 23, **characterised in that** the interface surface (21; 23; 31; 37; 39; 41; 53; 55; 57) of the reinforcing element (3) overall converges towards the pedal crank (2), and the interface surface (22; 24; 32; 38; 40; 42; 54; 56; 58) of the pedal crank (2) overall diverges towards the reinforcing element (3).

25. Pedal crank assembly (1) according to one of claims 15 to 23, **characterised in that** the interface surface (43; 46; 48) of the reinforcing element (3) overall diverges towards the pedal crank (2), and the interface surface (44; 47; 49) of the pedal crank (2) overall converges towards the reinforcing element (3).

26. Pedal crank assembly (1) according to one of the previous claims, **characterised in that** the interface surfaces (51, 52; 53, 54; 55, 56) between the pedal crank (2) and the reinforcing element (3) have a different extent at different angular positions about the axis (X).

27. Pedal crank assembly (1) according to claim 26, **characterised in that** the interface surfaces (51, 52; 53, 54) between the pedal crank (2) and the reinforcing element (3) are eccentric surfaces with respect to the hole (7).

28. Pedal crank assembly (1) according to claim 27, **characterised in that** the axis (X1) of the interface surfaces (45, 46) is parallel to the axis (X), and defines, with the axis (X), a plane (ε) sloping with respect to a longitudinal centre line (Y) of the pedal crank (2) by an angle (β) comprised between 30° and 70°.

29. Pedal crank assembly (1) according to claim 26, **characterised in that** the interface surfaces (55, 56) between the pedal crank (2) and the reinforcing element (3) have a different slope (α', α'') at different angular positions about the axis (X).

## Patentansprüche

1. Fahrradpedalkurbelanordnung (1), enthaltend eine Pedalkurbel (2), die ein erstes Ende (4) zum Kuppeln mit einem Tretlager und ein zweites Ende (5) zum Kuppeln mit einem Pedal hat, wobei des erste Ende (4) und/oder das zweite Ende (5) ein Loch (7) enthält/enthalten, das sich von einer Seite (8) der Pedalkurbel (2) zum Kuppeln mit einer Achse (100) des Pedals bzw. des Tretlagers erstreckt, und ein Verstärkungselement (3), das sich um das Loch (7) an der Seite (8) der Pedalkurbel (2) erstreckt, wobei in der Richtung der Achse (X) das Verstärkungselement (3) eine Ausdehnung (H2) von weniger als die Hälfte der Ausdehnung (H4) des Loches (7) hat, **dadurch gekennzeichnet, dass** das Verstärkungselement (3) an der Pedalkurbel (2) befestigt ist (15, 20).

2. Pedalkurbelanordnung (1) nach Anspruch 1, **dadurch gekennzeichnet, dass** das Versiarkungselement (3) einen Abschnitt (12) aufweist, der so beschaffen ist, dass er einen Anlageabschnitt (103) der Achse (100) aufnimmt, der auf ihm ruht.

3. Pedalkurbelanordnung (1) nach Anspruch 1 oder 2, **dadurch gekennzeichnet, dass** in der Richtung der Achse (X) das Verstärkungselement (3) eine Ausdehnung (H2) von weniger als einem Fünftel der Ausdehnung (H4) des Loches (7) hat.

4. Pedalkurbelanordnung (1) nach einem der vorhergehenden Ansprüche, **dadurch gekennzeichnet, dass** in der Richtung einer Achse (X) des Loches (7) das Verstärkungselement (3) eine Ausdehnung H2) hat, die zwischen einer Stelgung (P) eines Innengewindes (10) des Loches (7) und dem Doppelten der Steigung (P) liegt.

5. Pedalkurbelanordnung (1) nach einem der vorhergehenden Ansprüche, **dadurch gekennzeichnet, dass** das Verstärkungselement (3) ein größeres Elastizitätsmodul als jenes der Pedalkurbel (2) hat,

6. Pedalkurbelanordnung (1) nach einem der vorhergehenden Ansprüche, **dadurch gekennzeichnet, dass** das Verstärkungselement (3) aus einem Material besteht, das aus Stahl, einer Titanlegierung und einerAluminiumlegierung gewählt ist.

7. Pedalkurbelanordnung (1) nach einem der vorhergehenden Ansprüche, **dadurch gekennzeichnet, dass** die Befestigung durch Verkleben (15) erfolgt.

8. Pedalkurbelanordnung (1) nach einem der vorhergehenden Ansprüche, **dadurch gekennzeichnet, dass** die Pedalkurbel (2) einen hervorstehenden Sitz (45) für die Aufnahme des Verstärkungselementes hat.

9. Pedalkurbelanordnung (1) nach einem der Ansprüche 1 bis 7, **dadurch gekennzeichnet, dass** die Pedalkurbel (2) einen ausgenommenen Sitz (14) für die Aufnahme des Verstärkungselementes (3) hat.

10. Pedalkurbelanordnung (1) nach einem der vorhergehenden Ansprüche, **dadurch gekennzeichnet, dass** die Befestigung durch Verstemmen (20) erfolgt.

11. Pedalkurbelanordnung (1) nach Anspruch 12, **dadurch gekennzeichnet, dass** die Befestigung durch ein Verstemmen (20) der Pedalkurbel (2) und/oder des Verstärkungselementes (3) um einen Sitz (14, 45) für das Verstärkungselement erfolgt

12. Pedalkurbelanordnung (1) nach einem der Ansprüche 1 bis 9, **dadurch gekennzeichnet, dass** die Pedalkurbel (2) aus einem Verbundmaterial besteht und die Befestigung durch Vergießen das Verstärkungselementes (3) in der Pedalkurbel (2) erfolgt

13. Pedalkurbelanordnung (1) nach einem der Ansprüche 1 bis 7 und 10, **dadurch gekennzeichnet, dass** das Verstärkungselement (3) auf der Außenoberfläche der Seite der Pedalkurbel (2) befestigt ist.

14. Pedalkurbelanordnung (1) nach einem der Ansprüche 1 bis 12, **dadurch gekennzeichnet, dass** die Pedalkurbel (2) und das Verstärkungselement (3) entlang einer entsprechenden Derührungsfläche (21, 22; 23, 24; 31, 32; 37, 38; 39, 40; 41, 42; 43, 44; 46, 47; 48, 49; 51, 52; 53, 54; 55, 56; 57, 58) in Kontakt stehen, die nicht vollständig in einer Ebene enthalten ist, die zu einer Achse (X) des Loches (7) schräg verläuft.

15. Pedalkurbelanordnung (1) nach Anspruch 14, **dadurch gekennzeichnet, dass** die Berührungsflächen (21, 22; 23, 24; 31, 32; 37, 38; 39, 40; 41, 42; 43, 44; 46, 47; 48, 49; 53, 54; 55, 56; 57, 58) einen insgesamt schrägen Verlauf im Bezug auf die Achse (X) haben.

16. Pedalkurbelanordnung (1) nach Anspruch 15, **dadurch gekennzeichnet, dass** die Berührungsflächen (21, 22; 43, 44; 48, 49; 53, 54) konische Oberflächen sind.

17. Pedalkurbelanordnung (1) nach Anspruch 16, **dadurch gekennzeichnet, dass** die Mantellinie der konischen Berührungsflächen (21. 22: 43, 44; 48, 49; 53, 54) im Bezug auf eine Ebene senkrecht zu der Achse (X) In einem Winkel (α) zwischen 5° und 45° geneigt ist.

18. Pedalkurbelanordnung (1) nach Anspruch 15, **dadurch gekennzeichnet, dass** die Berührungsflächen (23, 24) Rotationsflächen sind, die eine kurvenförmige Mantellinie mit wenigstens zwei Wendepunkten haben.

19. Pedalkurbelanordnung (1) nach Anspruch 15, **dadurch gekennzeichnet, dass** die Berührungsflächen (31, 32) Rotationsflächen sind, die eine kurvenförmige Mantellinie mit einem Wendepunkt haben

20. Pedalkurbelanordnung (1) nach Anspruch 15. **dadurch gekennzeichnet, dass** die Berührungsflächen (37, 38; 39, 40) Rotationsflächen sind, die eine umfangsbogeriförrnige Mantellinie haben.

21. Pedalkurbelanordnung (1) nach Anspruch 15, **dadurch gekennzeichnet, dass** die Berührungsflächen (41, 42; 46, 47) Rotationsflächen sind, die eine stufenförmige Mantellinie haben.

22. Pedalkurbelanordnung (1) nach Anspruch 15, **dadurch gekennzeichnet, dass** die Berührungsflächen (57, 58) mehrfach facettenartig sind.

23. Pedalkurbelanordnung (1) nach Anspruch 22, **dadurch gekennzeichnet, dass** die Berührungsflächen (57, 58) pyramidensfumpfförmige Oberflächen sind.

24. Pedalkurbelanordnung (1) nach einem der Ansprüche 15 bis 23, **dadurch gekennzeichnet, dass** sich die Berührungsfläche (21; 23; 31; 37; 39; 41; 53; 55; 57) des Verstärkungselementes (3) hin zu der Pedalkurbel (2) insgesamt verjüngt und sich die Berührungsfläche (22; 24; 32. 38; 40; 42; 54 56; 58) der Pedalkurbel (2) hin zu dem Verslärkungselement (3) insgesamt erweitert.

25. Pedalkurbelanordnung (1) nach einem der Ansprüche 15 bis 23, **dadurch gekennzeichnet, dass** sich die Berührungsfläche (43; 46; 48) des Verstärkungselementes (3) hin zu der Pedalkurbel (2) insgesamt erweitert und sich die Berührungsfläche (44; 47; 49) der Pedalkurbel (2) hin zu dem Verstärkungselement (3) insgesamt verjüngt

26. Pedalkurbelanordnung (1) nach einem der vorhergehenden Ansprüche, **dadurch gekennzeichnet, dass** die Berührungsflächen (51, 52; 53, 54; 55, 56) zwischen der Pedalkurbel (2) und dem Verstärkungselement (3) eine unterschiedliche Ausdehnung an unterschiedlichen Winkelpositionen um die Achse (X) haben.

27. Pedalkurbelanordnung (1) nach Anspruch 26, **dadurch gekennzeichnet, dass** die Berührungsflächen (51, 52; 53, 54) zwischen der Pedalkurbel (2) und dem Verstärkungselement (3) exzentrische Oberflächen im Bezug auf das Loch (7) sind,

28. Pedalkurbelanordnung (1) nach Anspruch 27, **dadurch gekennzeichnet, dass** die Achse (X1) der Berührungsflächen (45, 46) parallel zu der Achse (X) ist und mit der Achse (X) eine Ebene (e) bildet, die im Bezug auf eine Längsmittellinie (Y) der Pedalkurbel (2) in einen Winkel (β) zwischen 30° und 70° geneigt ist.

29. Pedalkurbelanordnung (1) nach Anspruch 26, **dadurch gekennzeichnet, dass** die Berührungsflächen (55, 56) zwischen der Pedalkurbel (2) und dem Verstärkungselement (3) eine unterschiedliche Neigung (α', α") an unterschiedlichen Winkelpositionen um die Achse (X) haben.

## Revendications

1. Ensemble de manivelle de pédalier de bicyclette (1) comprenant une manivelle de pédalier (2) ayant une première extrémité (4) en vue d'un accouplement avec un jeu de pédalier et une deuxième extrémité (5) en vue d'un accouplement avec une pédale, au moins l'une de ladite première extrémité (4) et de ladite deuxième extrémité (5) comprenant une trou (7) s'étendant depuis un côté (8) de la manivelle de pédalier (2) en vue d'un accouplement avec un axe (100) de la pédale ou du jeu de pédalier, respectivement, comprenant un élément de renfort (3) s'étendant autour du trou (7) au niveau dudit côté (8) de la manivelle de pédalier (2), dans lequel dans la direction de l'axe (X), l'élément de renfort (3) présente une étendue (H2) inférieure à la moitié de l'étendue (H4) du trou (7), **caractérisé en ce que** l'élément de renfort (3) subit une contrainte (15, 20) contre la manivelle de pédalier (2).

2. Ensemble de manivelle de pédalier (1) selon la revendication 1, **caractérisé en ce que** l'élément de renfort (3) comporte une partie (12) configurée pour recevoir une partie de butée (103) dudit axe (100) reposant sur celle-ci.

3. Ensemble de manivelle de pédalier (1) selon la revendication 1 ou 2, **caractérisé en ce que** dans la direction de l'axe (X), l'élément de renfort (3) présente une étendue (H2) inférieure à un cinquième de l'étendue (H4) du trou (7).

4. Ensemble de manivelle de pédalier (1) selon l'une des revendications précédentes, **caractérisé en ce que** dans la direction de l'axe (X) du trou (7), l'élément de renfort (3) présente une étendue (H2) comprise entre un pas (P) d'un taraudage interne (10) du trou (7) et deux fois le pas (P).

5. Ensemble de manivelle de pédalier (1) selon l'une quelconque des revendications précédentes, **caractérisé en ce que** l'élément de renfort (3) présente un module d'élasticité supérieur à celui de la manivelle de pédalier (2).

6. Ensemble de manivelle de pédalier (1) selon l'une quelconque des revendications précédentes, **caractérisé en ce que** élément de renfort (3) est constitué d'un matériau sélectionné parmi l'acier, un alliage de titane et un alliage d'aluminium.

7. Ensemble de manivelle de pédalier (1) selon l'une quelconque des revendications précédentes, **caractérisé en ce que** ladite contrainte comprend un collage (15).

8. Ensemble de manivelle de pédalier (1) selon l'une quelconque des revendications précédentes, **caractérisé en ce que** la manivelle de pédalier (2) comprend un logement en saillie (45) destiné à loger l'élément de renfort (3).

9. Ensemble de manivelle de pédalier (1) selon l'une quelconque des revendications 1 à 7, **caractérisé en ce que** la manivelle de pédalier (2) comprend un logement en creux (14) destiné à loger l'élément de renfort (3).

10. Ensemble de manivelle de pédalier (1) selon l'une quelconque des revendications précédentes, **caractérisé en ce que** ladite contrainte comprend un matage (20)

11. Ensemble de manivelle de pédalier (1) selon la revendication 12, **caractérisé en ce que** ladite contrainte comprend un matage (20) de la manivelle de pédalier (2) et/ou de l'élément de renfort (3) autour d'un logement (14, 45) pour l'élément de renfort (3).

12. Ensemble de manivelle de pédalier (1) selon l'une quelconque des revendications 1 à 9, **caractérisé en ce que** la manivelle de pédalier (2) est constituée d'un matériau composite et ladite contrainte est réalisée par co-moulage de l'élément de renfort (3) dans ladite manivelle de pédalier (2).

13. Ensemble de manivelle de pédalier (1) selon l'une des revendications 1 à 7 et 10, **caractérisé en ce que** l'élément de renfort (3) subit une contrainte contre la surface extérieure du côté de la manivelle de pédalier (2).

14. Ensemble de manivelle de pédalier (1) selon l'une quelconque des revendications 1 à 12, **caractérisé en ce que** la manivelle de pédalier (2) et l'élément de renfort (3) sont en contact le long d'une surface d'interface respective (21, 22 ; 23, 24 ; 31, 1, 32 ; 37, 38 ; 39, 40 ; 41, 42 ; 43, 44 ; 46, 47 ; 48, 49 ; 51, 52 ; 53, 54 ; 55, 56 ; 57, 58) qui n'est pas entièrement contenue dans un plan transversal à un axe (X) du trou (7).

15. Ensemble de manivelle de pédalier (1) selon la revendication 14, **caractérisé en ce que** les surfaces d'interface (21, 22 ; 23, 24 ; 31, 32 ; 37, 38 ; 39, 40 ; 41, 42 ; 43, 44 ; 46, 47 ; 48, 49 ; 53, 54 ; 55, 56 ; 57, 58) présentent une progression inclinée globale par rapport à l'axe (X).

16. Ensemble de manivelle de pédalier (1) selon la revendication 15, **caractérisé en ce que** les surfaces d'interface (21, 22 ; 43, 44 ; 48, 49 ; 53, 54) sont des surfaces coniques.

17. Ensemble de manivelle de pédalier (1) selon la revendication 16, **caractérisé en ce que** la ligne de génération des surfaces d'interface coniques (21, 22 ; 43, 44 ; 48, 49 ; 53, 54) est inclinée par rapport à un plan perpendiculaire à l'axe (X) d'un angle (α) compris entre 5° et 45°.

18. Ensemble de manivelle de pédalier (1) selon la revendication 15, **caractérisé en ce que** les surfaces d'interface (23, 24) sont des surfaces de rotation présentant une ligne de génération curviligne ayant au moins deux points d'inflexion.

19. Ensemble de manivelle de pédalier (1) selon la revendication 15, **caractérisé en ce que** les surfaces d'interface (31, 32) sont des surfaces de rotation présentant une ligne de génération curviligne ayant au moins un point d'inflexion.

20. Ensemble de manivelle de pédalier (1) selon la revendication 15, **caractérisé en ce que** les surfaces d'interface (37, 38 ; 39, 40) sont des surfaces de rotation présentant un arc d'une ligne de génération en forme de circonférence.

21. Ensemble de manivelle de pédalier (1) selon la revendication 15, **caractérisé en ce que** les surfaces d'interface (41, 42 ; 46, 47) sont des surfaces de rotation présentant une ligne de génération échelonnée.

22. Ensemble de manivelle de pédalier (1) selon la revendication 15, **caractérisé en ce que** les surfaces d'interface (57, 58) sont à facettes multiples.

23. Ensemble de manivelle de pédalier (1) selon la revendication 22, **caractérisé en ce que** les surfaces d'interface (57, 58) sont des surfaces en foire de tr-onc de pyramide.

24. Ensemble de manivelle de pédalier (1) selon l'une des revendications 15 à 23, **caractérisé en ce que** la surface d'interface (21; 23; 31; 37; 39 ; 41 ; 53 ; 55 ; 57) de l'élément de renfort (3) converge globalement vers la manivelle de pédalier (2), et la surface d'interface (22 ; 24 ; 32 ; 38 ; 40 ; 42 ; 54 ; 56 ; 58) de la manivelle de pédalier (2) converge globalement vers l'élément de renfort (3).

25. Ensemble de manivelle de pédalier (1) selon l'une des revendications 15 à 23, **caractérisé en ce que** la surface d'interface (43 ; 46 ; 48) de l'élément de renfort (3) diverge globalement vers la manivelle de pédalier (2), et la surface d'interface (44 ; 47 ; 49) de la manivelle de pédalier (2) diverge globalement vers l'élément de renfort (3).

26. Ensemble de manivelle de pédalier (1) selon l'une des revendications précédentes, **caractérisé en ce que** les surfaces d'interface (51, 52 ; 53, 54 ; 55, 56) entre la manivelle de pédalier (2) et l'élément de renfort (3) présentent une étendue différente à des positions angulaires différentes autour de l'axe (X).

27. Ensemble de manivelle de pédalier (1) selon la revendication 26, **caractérisé en ce que** les surfaces d'interface (51, 52 ; 53, 54) entre la manivelle de pédalier (2) et l'élément de renfort (3) sont des surface excentriques par rapport au trou (7).

28. Ensemble de manivelle de pédalier (1) selon la revendication 27, **caractérisé en ce que** l'axe (X1) des surfaces d'interface (45, 46) est parallèle à l'axe (X), et définit, avec l'axe (X), un plan (ε) incliné par rapport à une ligne centrale longitudinale (Y) de la manivelle de pédalier (2) d'un angle (β) compris entre 30° et 70°.

29. Ensemble de manivelle de pédalier (1) selon la revendication 26, **caractérisé en ce que** les surfaces d'interface (55, 56) entre la manivelle de pédalier (2) et l'élément de renfort (3) présentent une inclinaison différente (a', α") à des positions angulaires différentes autour de l'axe (X).
